# EUROPEAN PATENT APPLICATION

(11) **EP 4 488 036 A1**
(43) Date of publication of application: **08.01.2025**
(21) Application number: 23461622.5
(22) Date of filing: 06.07.2023
(51) Int. Cl.: B29C 64/236, B22F 10/47, B22F 12/00, B22F 12/33, B29C 64/245, B29C 64/40, B33Y 30/00

(54) **3D PRINTER WITH SIDE SUPPORTS**

(71) Applicant: Uniwersytet Zielonogórski, 65-417 Zielona Góra (PL)
(72) Inventor: Ostrowski, Kacper, 65-533 Zielona Gora (PL); Paczkowski, Jacek, 67-100 Nowa Sol (PL); Kramek, Krzysztof, 65-124 Zielona Gora (PL); Mrugalski, Marcin, 65-128 Zielona Gora (PL)
(74) Representative: JD&P Patent Attorneys Joanna Dargiewicz & Partners

(57) **Abstract**

The object of the invention is a 3D printer comprising a printer table moving in the Y-axis, above which is placed a rack on which the head moves in the Z-axis, the head also moving in the Z-axis on guides extending between the arms of the rack, and a control system, characterised in that the 3D printer is equipped with one wall at the rear or front of the table, which is adjacent to the table and moves with it in the Y-axis, whereby the wall comprises a plurality of blocks arranged in rows and columns, each fitted with an independently operating mechanism that extends the block towards the printed workpiece to serve as a support for the layers to be printed, the width of the wall being less than or equal to the width of the table and the height being less than the maximum Z-axis height at which the printer head operates.

## Description

The present invention relates to a 3D printer with side supports to assist the printing process and minimise the need to print supports for the printed object.

### Field of invention

3D printing is a slow process. Particularly when the printed part has a shape that forces the printing of additional supports. These are only needed at the time of printing and are removed from the part as soon as the process is complete. Printing them, although necessary, takes time and consumes filament that is ultimately not used.

### State of the art

US patent application US2022118700A1 describes a shape-shifting table that is divided into segments that can change their height in the Z-axis. With this approach, part of the support does not need to be printed, but this only solves the problem if the print does not obscure from below where the support is required.

US patent specification US11465351B2 describes a configurable chamber unrelated to 3D printers.

US patent application US2015290880A1 describes printing on a pre-prepared rack of cubes. This rack becomes an integral part of the print once the filament is applied to it, so the rack is disposable and not part of the printer.

So there is still a need in the field for 3D printers that enable simple and fast printing without the need for additional supports to be printed.

The aim of the present invention was therefore to develop a 3D printer design that provides supports for the printed object during the printing process, eliminating or significantly reducing the need to print supports along with the printed object.

This objective was achieved by the 3D printer according to the present invention.

### The summary of the invention

The object of the present invention is a 3D printer comprising a printer table moving in the Y-axis, above which is placed a rack on which the head moves in the Z-axis, the head also moving in the Z-axis on guides extending between the arms of the rack, and a control system, notable in that the 3D printer is equipped with one wall at the rear or front of the table, which is adjacent to the table and moves with it in the Y-axis, whereby the wall comprises a plurality of blocks arranged in rows and columns, each fitted with an independently operating mechanism that extends the block towards the printed workpiece to serve as a support for the layers to be printed, the width of the wall being less than or equal to the width of the table and the height being less than the maximum Z-axis height at which the printer head operates.

### Brief description of drawing

Fig. 1 schematically shows the construction of a 3D printer according to the present invention in perspective view.
Fig. 2 schematically shows a 3D printer according to the present invention during printing in front view.
Fig. 3 schematically shows a 3D printer according to the present invention during printing in perspective view.
Fig. 4 shows the algorithm that generates the layers.
Fig. 5 shows the printed workpiece with supports.
Fig. 6 schematically shows a 3D printer according to the present invention during printing when small supports need to be printed in perspective view.

### Detailed description of the invention

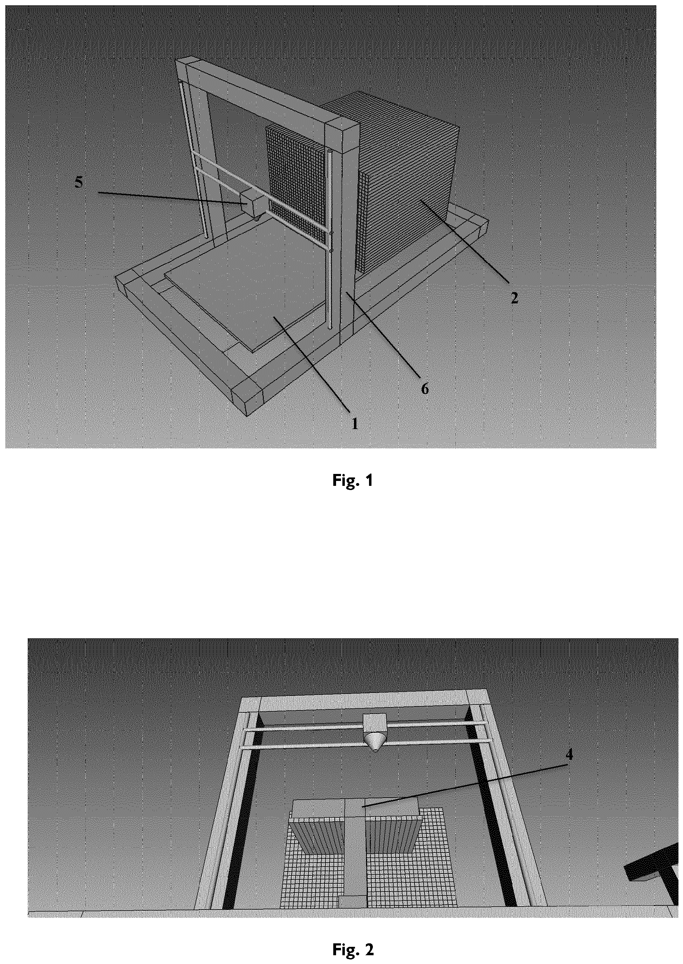

A 3D printer with mechanical supports (blocks) extending from the side or sides of the printer makes it possible to reduce and, in some cases, completely eliminate the printing of supports, which speeds up printing and reduces the consumption of filament. The 3D printer according to the present invention is shown in Fig. 1-3.

The proposed solution is a modification of the standard design of a 3D printer with a Y-axis moving table (1), which consists in adding one or two walls (2) to the table (1). The walls are rigidly attached to the side or sides of the printer's moving table. These walls consist of an array of extendable blocks (3). Each block has a separately modifiable position (ejection length). During printing, the blocks extend in such a way as to minimise the need for printing supports.

In the case of printing a layer which would normally require printing supports at a point away from the workpiece body (4) from the very bottom, since the print cannot hang in the air (it can also collapse if the connection to the workpiece body is too weak), a block (3) placed at the appropriate height (always below the print head (5) - below the printing plane) is extended. It extends so that it is as close as possible to the workpiece (4), after which the print head (5) can print on it as on a table.

The printer is designed in such a way that unnecessary layers of supports are not printed, since the block (3) is ejected in case of protruding workpiece elements (4) and used as a support on which to print. The block (3) slides out as soon as the printing plane (print head (5)) moves in the Z axis over the block (3).

It will still be necessary to print supports if any part of the print blocks the block (3) (obstructs) and prevents it from extending into the print area, or if the size (width) of the block (3) prevents it from adhering exactly to the surface of the printed workpiece. The denser the block matrix (2), i.e. divided into more blocks (3), the smaller the number of printed supports will be. The cross-sectional dimensions of the blocks are subject to technological constraints related to the actuators or other mechanisms responsible for ejecting the blocks.

The mechanism for adjusting the extension of the blocks (3) is arbitrary. It can be based on hydraulic systems, although this is not very precise, on stepper motors (MLN, MLS, MLA), or telescopic mechanisms.

In one implementation example, the 3D printer is equipped with one wall (2) at the back or front of the table (1). In another implementation example, the 3D printer is equipped with two walls (2) at the front and back of the table. This is due to the fact that in printers with a table moving in the Y-axis (1), the sides are utilised by the frame (6) on which the head (5) moves (in the Z-axis), which blocks the possibility of inserting two additional walls (2) with blocks (3) there.

In the case of a workpiece that needs a frame every "floor" in the same Z axis, the table according to US2022118700A1 will only be able to level the supports on the lowest floor, while above it is left to print the supports. In the case of the proposed solution, the problem does not occur, as there is a whole column of blocks (3) in the Z-axis that can independently support each floor.

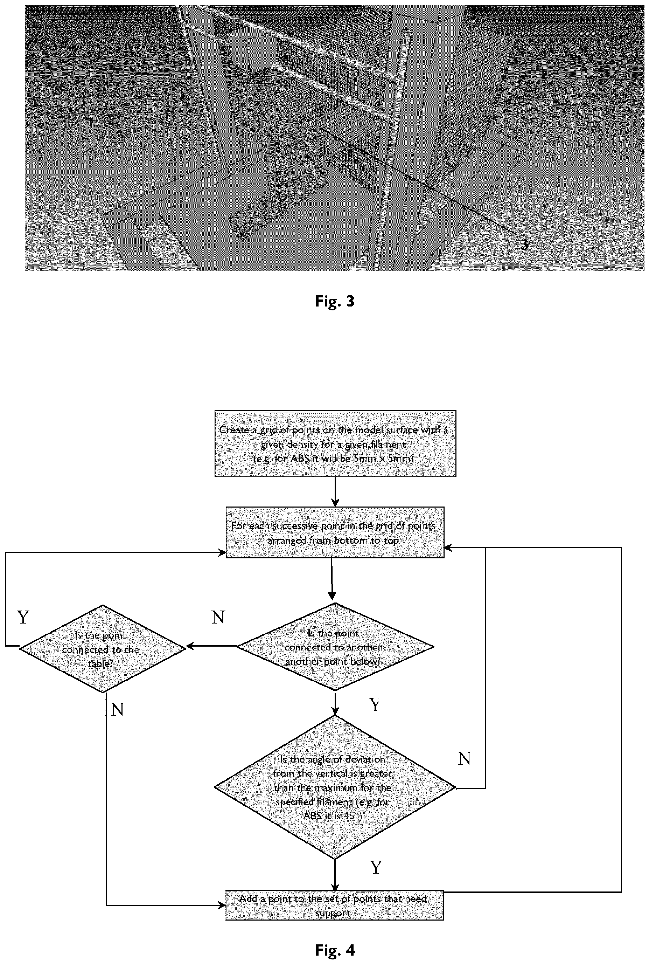

The printer should be equipped with a control system that generates printed supports based on the 3D model of the workpiece (4) and then minimises them using extending blocks (3) (supports) from the wall (2) (matrix). Algorithms that determine points in the workpiece that require a supporting structure are generally known, although there is a wide variety. They are usually part of a layer-generating algorithm (known as a slicer). The general form of the algorithm is shown in Fig. 4.

For such a set of points, supports are generated which can take different shapes (column, tree, etc.). However, they are generated from the top to the lowest printed point, or to the plane of the table.

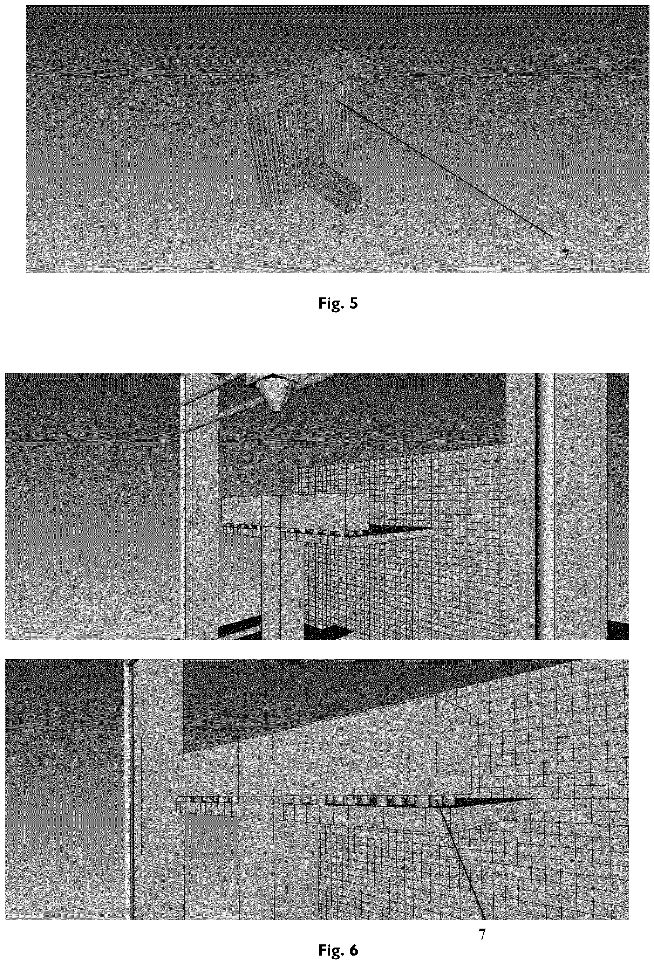

Workpiece (4) with the generated printed supports is shown in Fig. 5.

According to the invention, an attempt is then made to minimise the printed supports by extending the supports (blocks) (3). This is done by analysing the cross-sections of the workpiece (4) together with the generated supports with the thickness of the supports. If the cantilever (block) (3) can be ejected (it does not cross the workpiece surface) so as to cover the entire cross-section of the printed support, the printing of the support in question both in this cross-section and below is cancelled.

Therefore, it is advantageous to attach a second wall (2) with supports (blocks) (3), because if the support from one wall (2) crosses the surface of the workpiece (4) then the opposite wall (2) can cover the inaccessible section of the printed support.

In Fig. 6, the printed workpiece has a height that is not a multiple of the height of the supports, so the difference will be compensated for by the printed supports (7) that were not removed in the previous step.

Characteristics of the 3D printer according to the present invention are as follows:
1. Construction of printer table with attached wall / matrix (2) supports / blocks (3)
   a. the wall (2) supports (3) moves backwards / forwards together with the table (1);
   b. the table design assumes a section for the print and for the supports;
   c. the printing surface must not overlap the support wall (3);
   d. the design of the printer eliminates the possibility of the head (5) snagging on the wall (2) of the supports (3);
   e. the possibility of placing up to two walls (2) at the front and back (useful for workpieces (4) which have a different shape at the front and another at the back).
2. Any distance between supports (3).
3. Any size and shape of support (3) (square / rectangular in cross-section).
4. The printer driver generates the print supports (7) required to hold the structure, and then calculates which supports to extend to minimise the volume of the filament structure holding the workpiece (4).

## Claims

**1.** A 3D printer comprising a printer table (1) moving in the Y-axis, above which is placed a frame (6) on which moves a head (5) in the Z-axis, whereby the head (5) also moves in the Z-axis on guides extending between the arms of the frame (6) and a control system, **characterised in that the** 3D printer is equipped with one wall (2) at the rear or front of the table (1), which is adjacent to the table (1) and moves with it in the Y-axis, whereby the wall (2) comprises a plurality of blocks (3) arranged in rows and columns, each equipped with an independently operating mechanism extending the block (3) towards the printed workpiece to serve as a support for the printed layers, the width of the wall (2) being less than or equal to the width of the table (1) and the height being less than the maximum height in the Z-axis at which the printer head (5) operates.

**2.** The 3D printer according to claim 1, **characterised in that** it is equipped with two walls (2) at the rear and front of the table (1), which are adjacent to the table (1) and move with it in the Y axis.

**3.** The 3D printer according to claims 1 or 2, **characterised in that** the mechanism ejecting the block (3) is based on hydraulic systems, on stepper motors of the MLN, MLS or MLA type or on telescopic mechanisms.

**4.** The 3D printer according to claim 1 or 2 or 3, **characterised in that** the block (3) has a square-shaped cross-section.

**4.** 3D printer according to claim. 1 or 2 or 3, **characterised in that** the block (3) has a rectangular cross-section.
